(19) Europäisches Patentamt
European Patent Office
Office européen des brevets

(11) **EP 2 213 993 A1**

(12) **EUROPÄISCHE PATENTANMELDUNG**

(43) Veröffentlichungstag:
**04.08.2010 Patentblatt 2010/31**

(51) Int Cl.:
*G01J 3/46* (2006.01)   *H04N 1/60* (2006.01)
*G01J 1/08* (2006.01)

(21) Anmeldenummer: **09151729.2**

(22) Anmeldetag: **30.01.2009**

(84) Benannte Vertragsstaaten:
**AT BE BG CH CY CZ DE DK EE ES FI FR GB GR
HR HU IE IS IT LI LT LU LV MC MK MT NL NO PL
PT RO SE SI SK TR**
Benannte Erstreckungsstaaten:
**AL BA RS**

(71) Anmelder: **X-Rite Europe GmbH
8105 Regensdorf (CH)**

(72) Erfinder: **Frick, Beat
8107 Buchs (CH)**

(74) Vertreter: **Schwabe - Sandmair - Marx
Patentanwälte
Stuntzstraße 16
81677 München (DE)**

(54) **Kalibrierverfahren, Farbmessverfahren und Anwendung des letzteren**

(57) Ein Notebook Rechner ist mit einem in seine Tastaturplatte (1) integrierten Lichtmesssensor (10) ausgestattet, welcher den Monitor (4) des Rechners im geschlossenen Zustand ausmessen kann. Der Lichtmesssensor wird (nach einer vorgängigen herstellerseitigen Linearisierung) im in den Notebook Rechner eingebauten Zustand auf den zuvor mittels eines externen Farbmessgeräts vollständig charakterisierten bzw. profilierten Monitor des Notebook Rechners kalibriert, die dabei erzeugten Kalibrierungsdaten werden nicht-flüchtig, vorzugsweise im Lichtmesssensor selbst angespeichert. Anhand der abgespeicherten Kalibrierungsdaten des Lichtmesssensors lassen sich die Sensor-Signale in X,Y,Z-Farbwerte umrechnen. Der an sich nur Leuchtdichten bzw. Helligkeiten messende Lichtmesssensor wird auf diese Weise zu einem Colorimeter, das in Kombination mit dem Monitor, auf den es kalibriert wurde, zuverlässige Ergebnisse liefert. Mit Hilfe des so kalibrierten Lichtmesssensors lässt sich jederzeit eine Neu-Kalibrierung (Profilierung) des Monitors durchführen.

**Fig. 1**

EP 2 213 993 A1

**EP 2 213 993 A1**

**Beschreibung**

Die Erfindung betrifft ein Verfahren zur Kalibrierung eines in einen Notebook Rechner integrierten Lichtmesssensors gemäss dem Oberbegriff des unabhängigen Anspruchs 1, ein Messverfahren zur Bestimmung von X,Y,Z-Farbwerten an einem Monitor eines Notebook Rechners gemäss dem Oberbegriff des unabhängigen Anspruchs 8 sowie eine Anwendung des Messverfahrens für die Charakterisierung des Monitors eines Notebook Rechners gemäss dem Oberbegriff des unabhängigen Anspruchs 13.

Farbmanagement findet immer weitere Verbreitung und kommt im Zuge der immer besser werdenden LCD Monitoren auch bei mit solchen Monitoren ausgestatteten Rechnern, speziell auch Notebook Rechnern, zum Einsatz. Es sind auch schon Notebook Rechner mit einem in die Tastaturplatte integrierten Lichtmesssensor bekannt, welche bei geschlossenem Notebook, wenn also der den Monitor tragende Deckel des Rechners auf der Tastaturplatte aufliegt, eine Ausmessung des Monitors in einem im Blickfeld des Messsensors befindlichen Bereich erlauben. Mittels auf dem Rechner laufender zugehöriger Profilierungssoftware kann dann eine Charakterisierung des Monitors vorgenommen und dabei ein ICC Farbprofil erstellt und abgespeichert werden. Dieser Vorgang verläuft in analoger Weise wie die bekannte Farbprofilerstellung mittels eines externen Monitorfarbmessgeräts. Ein mit einem Farbmesssensor ausgestatteter Notebook Rechner ermöglicht dem Benutzer in Kombination mit einer entsprechenden Profilierungssoftware z.B. den Monitor nach der ersten Systeminstallation nach eigenen Wünschen und Bedürfnissen zu kalibrieren (profilieren), jederzeit den Original-Kalibrierungszustand des Monitors wiederherzustellen, nach einer Neuinstallation des Rechners einen zuvor eingestellten Kalibrationszustand wiederherzustellen und verschiedene Notebook Rechner auf gleich gute Eigenschaften zu kalibrieren.

Wenn als integrierter Lichtmesssensor - z.B. aus Kostengründen - kein echtes Colorimeter eingesetzt werden kann oder soll, dann muss der Sensor möglichst genau auf die farblichen Darstellungseigerischaften des individuellen auszumessenden Monitor kalibriert sein. Dies ist herstellerseitig sehr aufwändig, da der Hersteller des Lichtmesssensors in aller Regel nur beschränkt Einfluss darauf hat, welchen Monitor-Typ der Rechner-Hersteller verwenden wird. Ausserdem kann sich der Monitor-Typ kurzfristig ändern. Durch die vorliegende Erfindung soll nun ein Weg aufgezeigt werden, wie mit verhältnismässig geringem Aufwand eine genaue Kalibrierung eines in einen Notebook Rechner integrierten Lichtsensors auf den Monitor des Notebook Rechners durchgeführt werden kann.

Diese der Erfindung zugrundeliegende Aufgabe wird durch das im unabhängigen Anspruch 1 definierte Kalibrierverfahren bzw. das im unabhängigen Anspruch 8 definierte Messverfahren gelöst. Die erfindungsgemässe Anwendung des Messverfahrens ist Gegenstand des unabhängigen Anspruchs 13. Weiterbildungen und besonders vorteilhafte Ausgestaltungen des erfindungsgemässen Kalibrier- bzw. Messverfahrens sind Gegenstand der jeweils abhängigen Ansprüche.

Der wesentlichste Gedanke der Erfindung besteht darin, den Lichtmesssensor (nach einer vorgängigen herstellerseitigen Linearisierung) im in den Notebook Rechner eingebauten Zustand auf den zuvor mittels eines externen Farbmessgeräts vollständig charakterisierten bzw. profilierten Monitor des Notebook Rechners zu kalibrieren. Die Erst-Profilierung des Monitors und die Kalibrierung des Lichtmesssensors auf den profilierten Monitor sind einmalige Vorgänge, die am zweckmässigsten beim Rechner-Hersteller (Assemblierer) stattfinden und dort einfach, schnell und vollautomatisch durchgeführt werden können. Das dabei erzeugte Monitor-Profil und die zugehörige Lookup-Tabelle der Grafikkarte werden in üblicher Weise als Datei im Rechner bzw. im Speicher der Grafikkarte gespeichert, und die Kalibrierungsdaten für den Lichtsensor werden in nicht-flüchtiger Weise entweder im Rechner oder vorzugsweise in einem dafür vorgesehenen Speicher des Lichtmesssensors abgespeichert. Anhand der abgespeicherten Kalibrierungsdaten des Lichtmesssensors lassen sich die Sensor-Signale (in noch zu beschreibender Weise) in X,Y,Z-Farbwerte umrechnen. Der an sich nur Leuchtdichten bzw. Helligkeiten messende Lichtmesssensor wird auf diese Weise zu einem Colorimeter, das in Kombination mit dem Monitor, auf den es kalibriert wurde, zuverlässige Ergebnisse liefert.

Weitere Details und Vorteile ergeben sich aus der nachstehenden Beschreibung in Verbindung mit der Zeichnung. In der Zeichnung zeigen:

Fig. 1    einen Notebook Rechner mit integriertem Lichtmesssensor in aufgeklapp- tem Zustand,

Fig. 2    einen stark schematisierten Teilschnitt nach der Linie II-II der Fig. 1,

Fig. 3    ein Prinzipschema der elektronischen Komponenten des Lichtmesssen- sors,

Fig. 4    eine schematische Anordnung zur Kalibrierung (Linearisierung) des Licht- messsensors,

Fig. 5    den Notebook Rechner während der Profilierung seines Monitors mittels eines externen Farbmessgeräts und

Fig. 6    den Notebook Rechner während der Kalibrierung des Lichtmesssensors auf den zuvor profilierten Monitor des Notebook Rechners,

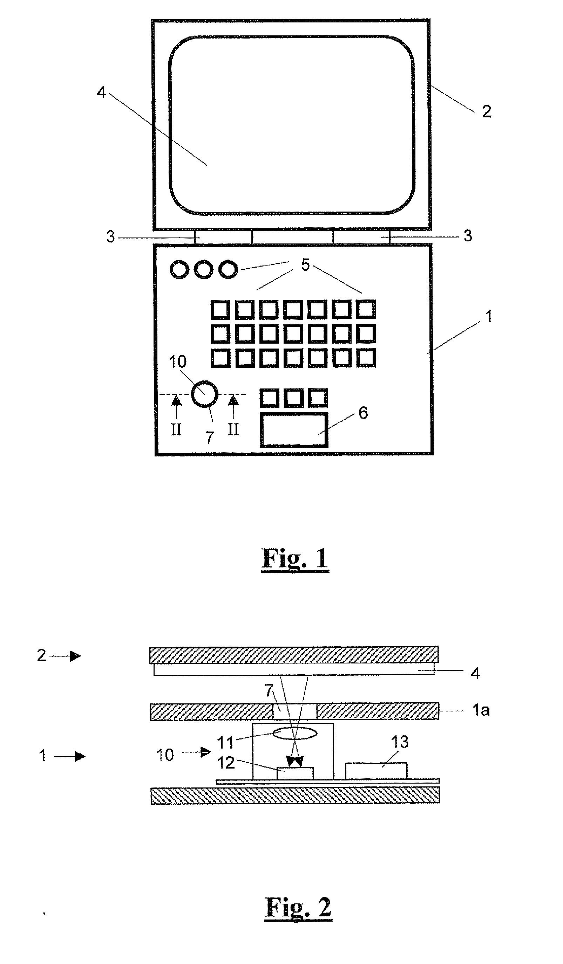

Die Fig. 1 zeigt einen Notebook Rechner, der in an sich bekannter Weise einen Bodenteil 1 und einen Deckelteil 2 umfasst, die mittels Scharnieren 3 gelenkig miteinander verbunden sind. Im Deckelteil 2 ist der Monitor 4 des Rechners angeordnet, im Bodenteil 1 befinden sich alle übrigen Komponenten des Rechners. Der Bodenteil 1 ist an seiner Oberseite durch eine Tastaturplatte 1 a mit diese durchgreifenden Tasten 5 und einem Berührungssteuerfeld 6 abgeschlossen.

Unter der Tastaturplatte 1a ist, wie aus Fig. 2 erkennbar, im Bodenteil 1 ein als Ganzer mit 10 bezeichneter Lichtmesssensor angeordnet, der vom Rechner bezüglich Messdaten und in ihm gespeicherter Kalibrationsdaten abgefragt werden kann. Der Lichtmesssensor 10 besteht im Wesentlichen aus einer Eingangsoptik 11, einem lichtelektrischen Wandler 12 und einer Steuerelektronik 13, die die Verbindung zwischen Wandler 12 und dem Datensystem des Rechners herstellt. Im Bereich der Eingangsoptik 11 befindet sich in der Tastaturplatte 1 a ein Messfenster 7, durch welches bei geschlossenem Deckelteil 2 Licht vom Monitor 4 hindurchtreten kann und den Lichtmesssensor 10 beaufschlagt. Der Lichtmesssensor 10 sieht also bei geschlossenem Notebook Rechner durch das Messfenster 7 hindurch den dem Messfenster gegenüberliegenden Bereich des Monitors 4.

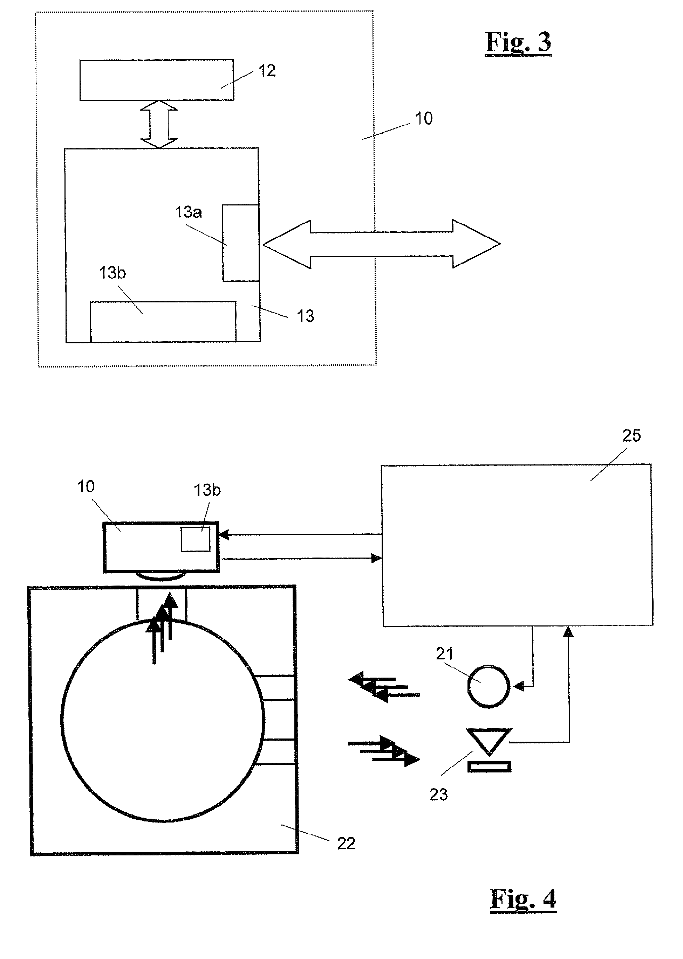

Die Fig. 3 zeigt ein Prinzipschema der elektronischen Komponenten des Lichtmesssensors 10. Der lichtelektrische Wandler 12 ist mit der Steuerelektronik 13 verbunden, welche das Auslesen der Messdaten aus dem Wandler realisiert und eine Schnittstelle 13a zur Verfügung stellt, über welche sie Daten mit dem Notebook Rechner (oder einem anderen Rechner) austauschen kann. Zusätzlich weist die Steuerelektronik 13 einen beschreibbaren nicht-flüchtigen Speicher 13b auf, in den über die Schnittstelle 13a gewisse für den Lichtmesssensor spezifische Daten geschrieben und selbstverständlich auch wieder aus ihm ausgelesen werden können. Darauf wird weiter unten noch näher eingegangen.

Der Lichtmesssensor 10 ist ein ein-, drei-, vier- oder mehrkanalig ausgelegtes Messgerät, dessen elektrische(s) Ausgangssignal(e) nur von der Bestrahlungsstärke des es beaufschlagenden Messlichts abhängt(en). Typischerweise enthält ein solcher Lichtmesssensor als Wandler einen Licht/Frequenz-Wandler, wobei das Ausgangssignal dann durch die Frequenz eines periodischen elektrischen Signals repräsentiert wird. Für die Ausmessung eines Rechner-Monitors ist eine einkanalige Auslegung des Lichtmesssensors ausreichend, weil die einzelnen Farben ja durch entsprechende Ansteuerung des Monitors selbst getrennt werden können. Für diese Einsatzzwecke genügt also ein monochromatischer (schwarz-weiss) Sensor, der über den gesamten sichtbaren Bereich des Spektrums ausreichend empfindlich ist. Farbfilter können entfallen. Ein geeigneter monochromatischer Wandler ist z.B. der Typ TSL 237T der Firma Taos. Ein Beispiel für einen dreikanalig (RGB) ausgelegten Wandler ist der Typ TCS 230 der Firma Taos.

Den folgenden Ausführungen ist ein einkanalig ausgelegter Lichtmesssensor zugrunde gelegt, also ein Lichtmesssensor mit einem einzigen Wandler, der über den gesamten sichtbaren Teil des Spektrums ausreichend empfindlich ist. Der Lichtmesssensor 10 wird im Folgenden der Kürze halber einfach als Sensor 10 bezeichnet.

Bevor der Sensor 10 eingesetzt werden kann, muss er zunächst einmal linearisiert werden. Dabei wird der Zusammenhang zwischen den den Sensor beaufschlagenden Lichtintensitäten (Bestrahlungsstärken) und dem daraus resultierenden Messsignal (z.B. Frequenz) ermittelt und linearisiert. Diese Linearisierung wird vorzugsweise beim Hersteller des Sensors 10 durchgeführt und kann z.B. in einer Anordnung gemäss Fig. 4 erfolgen. Diese Linearisierung kann gleichzeitig auch zu Qualitätskontrollzwecken für den Sensor herangezogen werden.

Eine elektrisch steuerbare variable Lichtquelle 21 sendet Licht in einen nach dem Prinzip einer Ulbricht-Kugel arbeitenden Lichtintegrator 22. An den beiden Ausgängen des Lichtintegrators 22 sind einerseits ein Referenzlichtmessgerät 23 und anderseits der zu linearisierende Sensor 10 angeschlossen. Ein Rechner 25 steuert die variable Lichtquelle (z.B. eine einzelne Leuchtdiode oder eine Kombination von mehreren verschiedenfarbigen Leuchtdioden) an und stellt dabei für jeden gewünschten Farbkanal separat die Lichtintensität stufenweise von null auf einen Maximalwert. Das Referenzlichtmessgerät 23 misst die jeweils tatsächlich vorliegenden Beleuchtungsstärken und teilt sie dem Rechner 25 mit. Der zu linearisierende Sensor 10 erzeugt den empfangenen Beleuchtungsstärken entsprechende Messwerte, beispielsweise Frequenzen, die ebenfalls dem Rechner 25 zugeführt werden. Der Rechner 25 ordnet pro Farbkanal die vom Sensor 10 erzeugten Messwerte den entsprechenden zugrundeliegenden Lichtintensitäten bzw. Beleuchtungsstärken zu und bildet daraus pro Farbkanal je eine im Folgenden als Lookup-Tabelle bzw. kurz LUT bezeichnete Nachschlagtabelle, die die Empfindlichkeit des Sensors in den jeweiligen Farbkanälen linearisiert. Diese LUT's sind für jeden individuellen Sensor spezifisch und werden vorzugsweise im Speicher 13b des Sensors 10 selbst abgespeichert. Selbstverständlich könnte diese LUT's auch anderen Orts im Notebook Rechner nicht-flüchtig abgespeichert werden. Wenn mit dem Sensor dann Licht gemessen wird, wird sein Ausgangssignal durch Zugriff auf die passende LUT korrigiert. Das korrigierte Sensor-Signal ist dann streng proportional zur den Sensor beaufschlagenden Beleuchtungsstärke. Wenn im Folgenden von Sensor-Signal gesprochen wird, ist immer das gemäss Vorstehendem linearisierte Signal gemeint.

Das folgende Flussdiagramm veranschaulicht die vorstehend erläuterten Schritte:

Zyklus mit anderen Farben und
Beleuchtungsstärken
wiederholen

Farbe und
Beleuchtungsstärke
der Lichtquelle
einstellen

Beleuchtungsstärke
mit Referenzgerät
messen

Sensorsignal auslesen

Lichtfarbe,
Beleuchtungsstärke
und Sensorsignal
speichern

Alle Zyklen
fertig ?

nein

ja

Lookup-Tabellen
(LUT's) für Sensor-
Linearisierung bilden

Lookup-Tabellen (im
Sensor) nicht-flüchtig
abspeichern

Ein Sensor der vorstehend beschriebenen Art stellt nichts anderes als ein Helligkeitsmessgerät dar und kann daher nicht ohne weiteres zur Profilierung des Monitors herangezogen werden. Für diese Aufgabe muss vielmehr der Monitor in allen seinen farbmetrischen Darstellungseigenschaften voll charakterisiert sein, das heisst, die aus je drei Stimuli r,g,b resultierenden, vom Monitor dargestellten Farbwerte X,Y,Z müssen für alle möglichen Stimuli-Kombinationen bekannt sein.

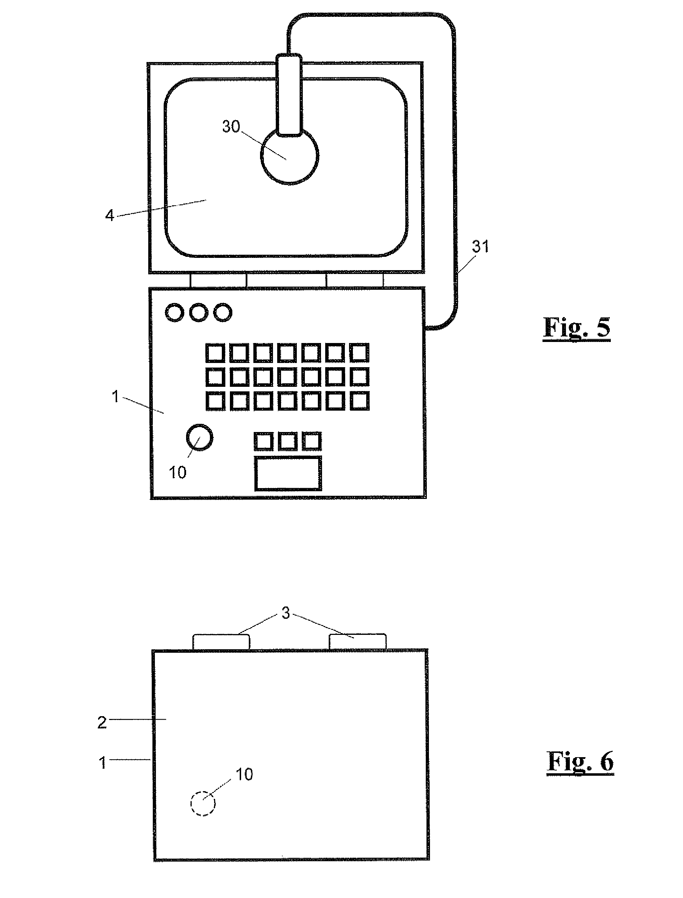

Deshalb wird zunächst in einem weiteren Schritt eine Charakterisierung (Profilierung) des Monitors 4 durchgeführt. Dazu wird, wie in Fig. 5 dargestellt, ein hochpräzises Farbmessgerät 30 vor dem Monitor befestigt und dieser damit bei Ansteuerung mit unterschiedlichen Stimuli-Tripeln r,g,b ausgemessen. Das Farbmessgerät 30 ist über ein Kabel 31 z.B. über eine USB-Schnittstelle mit dem Notebook Rechner verbunden. Als Farbmessgerät kann z.B. das Gerät EyeOne der Firma X-Rite Europe GmbH eingesetzt werden. Im Rechner ist eine Profilierungssoftware geladen, z.B. die zum genannten Gerät EyeOne gehörige Software. Die Profilierung von Monitoren ist zwar dem Fachmann bekannt, sie soll jedoch aus Gründen des Gesamtverständnisses hier noch kurz skizziert werden.

Ein Monitor wird in einem Rechner von einer Grafikkarte angesteuert, welche ihrerseits als Steuersignale drei Stimuli (Farbwerte) in Form von r,g,b Werten als Eingangsgrössen erhält. Die Grafikkarte enthält für jeden der drei Stimuli in einem internen Speicher drei Nachschlagtabellen (LUT's), welche den Wert der Stimuli je mit einem Faktor multiplizieren. Im Ausgangszustand sind die LUT's rein linear und bewirken nur eine Skalierung der Stimuli auf den Eingangsbereich des grafikkarteneigenen Analog/Digital-Wandlers. Nun wird, gesteuert durch die genannte Profilierungssoftware, der Monitor mit einer von 0 bis max (z.B. in einem 8-bit-System beträgt max = 255) stufenweise ansteigenden Anzahl von Stimuli-Kombinationen r=g=b angesteuert und mit dem Farbmessgerät die Leuchtdichte für jede dieser Kombinationen ausgemessen. Daraus werden (in der Regel im Farbmessgerät selbst) die X,Y,Z-Farbwerte bestimmt. Mit dem Stimuli-Tripel 0,0,0 erhält man den Dunkelpunkt Xd, Yd und Zd. Mit den jeweiligen Höchstwerten der Stimuli ergibt sich der hellste mit dem Monitor darstellbare Punkt, der sog. generische Weisspunkt Xw, Yw, Zw. Ein gewünschter Weisspunkt kann nun gewählt werden, z.B. als der generische Weisspunkt Xw, Yw, Zw selbst oder als bestimmte Farbtemperatur (Kelvin) als spezifische Kombination X,Y,Z <= Xw,Yw, Zw oder gemäss einer Norm (z.B. D65) als spezifische Kombination X,Y,Z <= Xw,Yw, Zw. Die Profilierungssoftware verändert nun die drei LUT's der Grafikkarte entsprechend. Ferner können auch die Gamma-Kurven der drei Farbkanäle den Wünschen entsprechend verändert werden. Typische Option dabei sind gamma = 1 oder gamma = 1.8 für MacIntosh-Systeme oder gamma = 2.2 für Windows-Systeme. Der (Standard-)Wert gamma = 1 führt zu einem linearen Anstieg von Y mit steigendendem Input r=g=b, wobei die Chromazität erhalten bleibt und sich nur verschiedene Neutral-Graustufen ergeben. Die Gamma-Werte 1.8 und 2.2 lassen ebenfalls die Chromazität konstant, führen aber zu einem exponentiellen Anstieg von Y zwischen Dunkelpunkt und (gewähltem) Weisspunkt. Die gewünschten Gamma-Werte werden ebenfalls durch entsprechende Anpassung der LUT's der Grafikkarte eingestellt.

Mit den gemäss Vorstehendem eingestellten LUT's der Grafikkarte wird nun die Grafikkarte mit einem Set von verschiedenen Stimuli-Kombinationen angesteuert und für jede Kombination werden mit dem Farbmessgerät 30 die zugehörigen X,Y,Z-Werte des Monitors gemessen. Typischerweise stellen die Kombinationen verschiedene Grau-Abstufungen (r=g=b), verschiedene Abstufungen jeweils nur eines der 3 Stimuli (r,0,0), (0,g,0), (0,0,b) und verschiedene (gleiche) Abstufungen von jeweils 2 der 3 Stimuli dar (r=g,b=0), (r=b, g=0), (r=0,g=b). Der Monitor zeigt dabei jeweils verschiedene Abstufungen von grau, von rot, grün bzw blau und von gelb, magenta bzw. cyan. Je nach Strategie können auch noch andere Stimuli-Kombinationen angesteuert werden. Aus den gemessenen X,Y,Z-Werten kann jede metrische Farbraum-Repräsentation berechnet werden, z.B. sRGB oder AdobeRGB. Mit einer ausreichend grossen Anzahl von Messwerten kann aus den Farbkoordinaten des gewählten Farbraums (z.B. sRGB) und den zugrundeliegenden Stimuli-Tripeln r,g,b ein mathematisches Modell der Kombination Grafikkarte-Monitor berechnet werden, das auch für beliebige Stimuli r,g,b die Bestimmung der zugehörigen X,Y,Z-Werte durch Interpolation und Extrapolation erlaubt. Die zugrundeliegende, bekannte Technologie wird als Geräte-Profilierung bezeichnet. Das zugehörige invertierte Modell ergibt das erforderliche Stimuli-Tripel r,g,b, mit welchem die Grafikkarte angesteuert werden muss, um einen gewünschten Farbort im Zielfarbraum (z.B. sRGB) darzustellen, und zwar wiederum durch Interpolation bzw. Extrapolation für den ganzen Farbraum. Das invertierte Modell wird gewöhnlich in einer vom ICC (International Color Consortium) standardisierten Form dagestellt und wird in dieser Form als ICC Profil bezeichnet. Das ICC Profil enthält minimal eine 3*3-Matrix, welche die erforderliche Drehung des Monitor-eigenen Farbraums in den Zielfarbraum bewirkt. Das ICC Profil wird als Datei auf dem Rechner gespeichert und kann von jedem ICC Profile unterstützenden Grafikprogramm gelesen und verwendet werden. Eine Beschreibung des Datei-Formats eines ICC Profils findet sich z.B. in der vom ICC herausgegebenen "Specification ICC.1:2001-12".

Das folgende Flussdiagramm veranschaulicht die beschriebene Monitor-Profilierung:

```
                                    ┌──────────────────────┐
                    ○ ◄────────────│ Zyklus mit anderen   │
                    │               │ Stimuli wiederholen  │
                    ▼               └──────────────────────┘
          ┌──────────────────┐                 ▲
          │  Monitor mit Stimuli │               │
          │  r,g,b ansteuern │                   │
          └──────────────────┘                   │
                    │                             │
                    ▼                             │
          ┌──────────────────┐                   │
          │ X,Y,Z-Werte mit ext. │               │
          │  Farbmessgerät   │                   │
          │  bestimmen       │                   │
          └──────────────────┘                   │
                    │                             │
                    ▼                             │
          ┌──────────────────┐                   │
          │ Stimuli r,g,b und │                  │
          │ zugehörige X,Y,Z- │                  │
          │  Werte speichern │                   │
          └──────────────────┘                   │
                    │                             │
                    ▼                             │
              ◇ Alle Stimuli                      │
                abgearbeitet ?  ──── nein ────────┘
                    │
                    ja
                    │
                    ▼
          ┌──────────────────┐
          │ Aus Stimuli r,g,b und │
          │ zugehörigen X,Y,Z- │
          │ Werten Monitor-Profil │
          │  berechnen       │
          └──────────────────┘
                    │
                    ▼
          ┌──────────────────┐
          │  Monitor-Profil als │
          │  Datei im Rechner │
          │  speichern       │
          └──────────────────┘
```

Nach der vorstehend beschriebenen Profilierung des Monitors ist letzterer vollständig charakterisiert, d.h. für jedes beliebige Stimuli-Tripel r,g,b ist das vom Monitor dargestellte Werte-Tripel X,Y,Z durch Anwendung des Monitor Modells berechenbar. Als nächster Schritt folgt nun eine Kalibrierung des Sensors 10 auf den gemäss Vorstehendem profilierten Monitor 4. Auch dieser Schritt wird von einer auf dem Rechner installierten und laufenden Software gesteuert. Nach dem Start der Software wird der Deckel des Notebook Rechners geschlossen, so dass der Sensor 10 den Monitor 4 "sehen" kann (Fig. 6). Der Start der Software kann auf die übliche Weise mittels einer grafischen Benutzer-Oberfläche oder durch eine speziell dafür vorgesehene Taste der Tastatur oder ev. auch durch das Schliessen des Deckels ausgelöst werden.

Sofern die LUT's der Grafikkarten bei der Monitor-Profilierung (z.B. hinsichtlich des Weisspunkts oder des Gamma-Werts) geändert worden sind, werden als erstes die LUT's wieder auf ihre ursprüngliche, rein lineare Form zurückgesetzt.

Bei Verwendung eines einkanaligen (monochromen) Sensors 10 wird dann wie folgt weiter vorgegangen:

Die Grafikkarte wird mit je einem Satz von Einkanal-Stimuli-Tripeln unterschiedlicher Werte (0...max,0,0; 0,0...max,0; 0,0,0...max) angesteuert, so dass der Monitor nacheinander verschieden abgestufte einfarbige Farbflächen bzw. Farbpatches (nur rot, nur grün bzw. nur blau) darstellt. Die vom Sensor 10 erfassten Luminanzen dieser Farbpatches seien allgemein als (linearisiertes) Sensorsignal S bezeichnet. Aus der vorangegangenen Monitor-Kalibrierung ist für jedes Stimuli-Tripel bzw. jedes damit vom Monitor dargestellte Farbpatch das zugehörige X,Y,Z-Tripel berechenbar. Die (linearisierten) Sensor-Signale S und die X,Y,Z-Werte sind jeweils proportional zur Monitor-Luminanz.

Gemäss einem zentralen Aspekt der vorliegenden Erfindung kann für den Zusammenhang zwischen den X, Y,Z-Werten und den Sensor-Signalen S das folgende System von 3*3 Gleichungen aufgestellt werden:

$$X = S_r * C_{rx} \qquad Y = S_r * C_{ry} \qquad Z = S_r * C_{rz} \qquad \text{(Gleichungen 1-3)}$$

$$X = S_g * C_{gx} \qquad Y = S_g * C_{gy} \qquad Z = S_g * C_{gz} \qquad \text{(Gleichungen 4-6)}$$

$$X = S_b * C_{bx} \qquad Y = S_b * C_{by} \qquad Z = S_b * C_{bz} \qquad \text{(Gleichungen 7-9)}$$

Darin sind X,Y,Z die zu den jeweiligen Stimuli-Tripeln r,g,b gehörigen, sich aus dem Monitor-Profil ergebenden Farbwert-Tripel. $S_r$, $S_g$ und $S_b$ sind die für die Stimuli je eines Kanals r bzw. g bzw. b gemessenen (linearisierten) Sensor-Signale und $C_{rx}$ .... $C_{bz}$ neun zunächst unbekannte Koeffizienten. Das bei genügender Anzahl von ausgemessenen Farbpatches mehrfach überbestimmte Gleichungssystem lässt sich nach den allgemein bekannten Methoden der Ausgleichsrechnung nach den neun Koeffizienten $C_{rx}$ .... $C_{bz}$ auflösen. Die neun Koeffizienten $C_{rx}$ .... $C_{bz}$ bilden die Kalibrierungsmatrix für den Sensor 10 und werden vorzugsweise im Sensor-eigenen nicht-flüchtigen Speicher 13b oder anderen Orts im Notebook Rechner nicht-flüchtig abgespeichert.

Falls ein mehrkanaliger Sensor (mit z.B. 3 oder 4 Kanälen) eingesetzt wird, ist das Vorgehen analog, wobei die Grafikkarte aber jetzt nicht nur mit Einkanal-Stimuli sondern auch mit kombinierten, insbesondere neutralen r=g=b Stimuli angesteuert werden kann. Die (linearisierten) Sensor-Signale der einzelnen Farbkanäle des Sensors seien mit $S_R$, $S_G$, $S_B$ für einen 3-kanaligen Sensor bzw. mit $S_R$, $S_G$, $S_B$, $S_C$ für einen 4-kanaligen Sensor bezeichnet. Die vorstehenden Gleichungen 1-9 verallgemeinern sich dann in je eine der folgenden Matrix-Gleichungen 10 bzw. 11:

$$\begin{matrix} X \\ Y \\ Z \end{matrix} \; = \; [C3*3] * \begin{matrix} S_R \\ S_G \\ S_B \end{matrix} \qquad \text{(Gleichung 10)}$$

$$\begin{matrix} X \\ Y \\ Z \end{matrix} \; = \; [C3*4] * \begin{matrix} S_R \\ S_G \\ S_B \\ S_C \end{matrix} \qquad \text{(Gleichung 11)}$$

[C3*3] und [C3*4] sind die Kalibrierungsmatrizen des 3-kanaligen bzw. des 4-kanaligen Sensors und sehen explizit wie folgt aus:

$$[C3*3] = \begin{array}{ccc} C_{rx} & C_{gx} & C_{bx} \\ C_{ry} & C_{gy} & C_{by} \\ C_{rz} & C_{gz} & C_{bz} \end{array} \qquad [C3*4] = \begin{array}{cccc} C_{rx} & C_{gx} & C_{bx} & C_{cx} \\ C_{ry} & C_{gy} & C_{by} & C_{cy} \\ C_{rz} & C_{gz} & C_{bz} & C_{cz} \end{array}$$

Die 3*3 bzw. 3*4 Elemente dieser Kalibrierungsmatrizen können analog zum einkanaligen Fall durch Einsetzen der Sensor-Signale und X,Y,Z-Werte aus den Monitor-Darstellungen bei den verschiedenen Stimuli nach den Methoden der Ausgleichsrechnung berechnet werden und werden dann auch wieder nicht-flüchtig, vorzugsweise im Sensor 10 selbst abgespeichert. Falls ein Sensor mit 5 oder 6 oder noch mehr Kanälen verwendet wird, nimmt die Sensor-Kalibrierungsmatrix sinngemäss die Dimension 3*5 bzw. 3*6 bzw. allgemein 3*n an. Das Rechenschema bleibt immer gleich. Das folgende Flussdiagramm veranschaulicht die Kalibrierung des Sensors auf den profilierten Monitor:

Die oben beschriebenen idealen linearen Rechenverfahren dienen der Veranschaulichung und können je nach beobachteten realen Monitor- und Sensor-Eigenschaften rechnerisch erweitert und verfeinert werden.

Die Abspeicherung der Koeffizienten der Sensor-Kalibrierungsmatrix im Sensor selbst hat für den Benutzer u.a. den wichtigen Vorteil, dass alle Kalibrierungsdaten auch nach der totalen Neuinstallation des Betriebssystems sofort zur Verfügung stehen.

Das nachfolgende Flussdiagramm fasst die drei grundlegenden Verfahrensblöcke Sensor-Linearisierung, Monitor-Profilierung mit externem Farbmessgerät und Sensor-Kalibrierung auf den profilierten Monitor nochmals übersichtlich zusammen:

```
┌─────────────────────────────┐
│     Sensor Linearisierung   │
│                             │
│   Ergebnis:   LUT's zur     │
│     Linearisierung des      │
│       Sensorsignals         │
└─────────────────────────────┘
              │
              ▼
┌─────────────────────────────┐        ┌─────────────────────────────┐
│    Monitor Kalibrierung     │        │   Sensor Kalibrierung auf   │
│  (Charakterisierung) mit    │───────▶│   den profilierten Monitor  │
│    externem Farbmessgerät   │        │                             │
│                             │        │   Ergebnis: Kalibrierungs-  │
│   Ergebnis:   Monitor-Profil│        │   koeffizientenmatrix zur   │
│   inkl. LUT's der Grafikkarte│       │    Berechnung von X,Y,Z-    │
│    mit Dunkelpunkt, Weiss-  │        │   Werten aus den Sensor-    │
│      punkt und Gamma        │        │          signalen           │
└─────────────────────────────┘        └─────────────────────────────┘
```

Unter Beiziehung der so bestimmten Sensor-Kalibrierungsmatrix lässt sich eine Neu-Kalibrierung des Monitors z.B. durch den Benutzer sehr einfach mittels des integrierten Sensors 10 durchführen. Dabei wird prinzipiell gleich vorgegangen wie vorstehend im Zusammenhang mit der Monitor-Profilierung beschrieben, wobei allerdings für die Ermittlung der X,Y,Z-Werte anstelle des externen Farbmessgeräts der eingebaute Sensor 10 herangezogen wird und alle Messungen bei geschlossenem Deckel des Notebook Rechners durchgeführt werden.

Die Neu-Charakterisierung bzw. Neu-Kalibrierung des Monitors erfolgt ebenso in zwei Schritten, wobei zuerst die LUT's der Grafikkarte bezüglich Dunkelpunkt, Weisspunkt, Farbtemperatur, Gamma etc. eingestellt und dann mit den angepassten LUT's die Profilierung durchgeführt wird. Im Folgenden wird zuerst das Vorgehen im Falle eines einkanaligen (monochromen) Sensors erläutert.

Zuerst wird die Grafikkarte mit rein linearen LUT's geladen. Dann wird die Grafikkarte mit einer Reihe von Einkanal-Stimuli r,0,0; 0,g,0; 0,0,b angesteuert und die entsprechenden Sensorsignale S werden gemessen. Die zugehörigen X,Y,Z-Werte werden dann mit Hilfe der abgespeicherten Koeffizienten $C_{rx}$ .... $C_{bz}$ der Sensor-Kalibrierungsmatrix unmittelbar aus den Gleichungen 1-3 bzw. 4-6 bzw. 7-9 berechnet. Nun werden die LUT's der Grafikkarte z.B. entsprechend dem gewünschten Weisspunkt und dem gewünschten Gamma-Wert angepasst und das Verfahren wird mit den so angepassten LUT's fortgesetzt.

Die Grafikkarte wird mit einem Satz von verschiedenen Stimuli, der sowohl Einkanal- als auch Mehrkanal-Stimuli umfasst, angesteuert. Die sich ergebenden X,Y,Z-Werte der dabei vom Monitor dargestellten Farbpatches lassen sich für Einkanal-Stimuli mit Hilfe der Gleichungen 1-9 aus den gemessenen Sensor-Signalen S unmittelbar berechnen. Wenn die X,Y,Z-Werte für Farbpatches mit reinem r-Stimulus, reinem g-Stimulus und reinem b-Stimulus mit $X_r,Y_r,Z_r$ bzw. $X_g,Y_g,Z_g$ bzw. $X_b,Y_b,Z_b$ bezeichnet werden, dann können die $X_{rgb}$, $Y_{rgb}$, $Z_{rgb}$ -Werte für zusammengesetzte Stimuli, da Monitoren erfahrungsgemäss ein gutes lineares (additives) Verhalten zeigen, durch Addition wie folgt berechnet werden:

$$X_{rgb} = X_r + X_g + X_b \qquad Y_{rgb} = Y_r + Y_g + Y_b \qquad Z_{rgb} = Z_r + Z_g + Z_b$$

Aus den aus den Sensor-Signalen berechneten X,Y,Z-Werten der einzelnen Farbpatches und den zugrundeliegenden Stimuli r,g,b wird dann in bekannter Weise das ICC Profil berechnet und als Datei abgespeichert.

Bei Verwendung eines Mehrkanal-Sensors ist das Vorgehen analog, nur dass in diesem Fall die X,Y,Z-Werte auch für Mehrkanal-Stimuli mit Hilfe der Sensor-Kalibrierungsmatrix unmittelbar aus den (mehrkanaligen) Sensor-Signalen berechnet werden können. Z.B. für einen dreikanaligen Sensor erfolgt dies nach Gleichung 10, z.B. für einen vierkanaligen Sensor nach Gleichung 11. Alle anderen Abläufe sind identisch. Das folgende Flussdiagramm fasst das vorstehend erläuterte Verfahren zur Neukalibrierung des Monitors mit Hilfe des integrierten Sensors nochmals zusammen:

Wiederum ist als Beispiel eine lineare Rechnung angeführt, Verfeinerungen je nach dem realen Verhalten des Systems sind möglich.

Die Gleichungssysteme 1-9 bzw. 10 bzw. 11 lassen sich wie folgt verallgemeinern:

$$\begin{matrix} X \\ Y \\ Z \end{matrix} \; = \; f(S_1...S_N, C_1...C_M)$$

Darin sind f eine parametrisierte Sensorkalibrierungsfunktion, $S_1...S_N$ die (linearisierten) Sensorsignale und $C_1...C_M$ die die Kalibrierungskoeffizienten bildenden Parameter der Sensorkalibrierungsfunktion, nach denen das Gleichungssystem bei der Sensor-Kalibrierung aufgelöst wird. Die Sensorkalibrierungsfunktion kann dem realen Verhalten des Systems angepasst werden und dazu z.B. auch nicht-lineare Komponenten aufweisen. Im Sensor 10 bzw. anderen Orts im Rechner können entweder nur die Parameter $C_1...C_M$ der Sensorkalibrierungsfunktion f oder aber auch die Sensorkalibrierungsfunktion f zusammen mit ihren Parametern $C_1...C_M$ abgespeichert werden.

Bei der Charakterisierung des Monitors werden ein oder mehrere ICC Profil(e) für einen Zielfarbraum bzw. mehrere Zielfarbräume inklusive Lookup-Tabellen erzeugt. Die entsprechenden Daten werden konventionell als Datei im Rechner gespeichert und zusätzlich auch noch nicht-flüchtig, und zwar vorzugsweise direkt im Speicher 13b des Lichtmesssensors selbst. Dies hat für den Rechner-Benutzer den grossen Vorteil, dass die herstellerseitige Erstkalibrierung des Rechners (factory calibration) im Falle einer Neuinstallation des Betriebssystems ohne Messungen direkt wieder hergestellt werden kann.

## Patentansprüche

1. Verfahren zur Kalibrierung eines in einen Notebook Rechner integrierten Lichtmesssensors auf den Monitor des Notebook Rechners, **dadurch gekennzeichnet, dass** der ein- oder mehrkanalige Lichtmesssensor (10) linearisiert ist und zur ihn beaufschlagenden Beleuchtungsstärke proportionale Sensor-Signale erzeugt, dass der Monitor (4) des Notebook Rechners vollständig charakterisiert (profiliert) wird, so dass zu jedem den Monitor ansteuernden Stimulus die zugehörigen X,Y,Z-Farbwerte eindeutig bestimmt sind, dass der charakterisierte Monitor (4) mit verschiedenen Stimuli angesteuert wird und mit dem Lichtmesssensor (10) die zugehörigen, zur Beleuchtungsstärke proportionalen Sensor-Signale ermittelt werden, dass die mit dem Lichtmesssensor (10) gemessenen Sensor-Signale sowie die zu den Stimuli gehörenden X,Y,Z-Farbwerte in ein Gleichungssystem eingespeist werden, welches die Sensor-Signale über eine Anzahl von Kalibrierungskoeffizienten mit den X,Y,Z-Farbwerten verknüpft, dass das Gleichungssystem nach den Kalibrierungskoeffizienten aufgelöst wird und dass die so berechneten Kalibrierungskoeffizienten nicht-flüchtig, vorzugsweise im Lichtmesssensor (10) selbst abgespeichert werden.

2. Verfahren nach Anspruch 1, **dadurch gekennzeichnet, dass** der Lichtmesssensor (10) ein oder mehrkanalig ist und jeweils zur ihn beaufschlagenden Beleuchtungsstärke proportionale Sensor-Signale $S_1...S_N$ erzeugt, dass das Gleichungssystem die Form

$$\begin{matrix} X \\ Y \\ Z \end{matrix} \; = \; f(S_1...S_N, C_1...C_M)$$

aufweist, worin f eine parametrisierte Sensorkalibrierungsfunktion ist und $C_1...C_M$ Kalibrierungskoeffizienten bildende Parameter der Sensorkalibrierungsfunktion sind, dass das Gleichungssystem nach den Kalibrierungskoeffizienten $C_1...C_M$ aufgelöst wird und dass die so berechneten Kalibrierungskoeffizienten oder die Sensorkalibrierungsfunktion f mit den Kalibrieiungskoeffizienten nicht-flüchtig, vorzugsweise im Lichtmesssensor (10) selbst abgespeichert werden.

3. Verfahren nach Anspruch 1, **dadurch gekennzeichnet, dass** der Lichtmesssensor (10) dreikanalig ist und jeweils drei zur ihn beaufschlagenden Beleuchtungsstärke proportionale Sensor-Signale $S_r, S_g, S_b$ erzeugt, dass das Gleichungssystem die Form

$$\begin{matrix} X \\ Y \\ Z \end{matrix} \quad = [C3*3] * \begin{matrix} S_R \\ S_G \\ S_B \end{matrix}$$

aufweist, worin [C3*3] eine aus 3*3 Kalibrierungskoeffizienten bestehende Sensor-Kalibrierungsmatrix ist, dass das Gleichungssystem nach den 3*3 Kalibrierungskoeffizienten aufgelöst wird und dass die so berechneten 3*3 Kalibrierungskoeffizienten nicht-flüchtig, vorzugsweise im Lichtmesssensor (10) selbst abgespeichert werden.

4. Verfahren nach Anspruch 1, **dadurch gekennzeichnet, dass** der Lichtmesssensor (10) einkanalig ist und nur ein zur ihn beaufschlagenden Beleuchtungsstärke proportionales Sensor-Signal erzeugt, dass der charakterisierte Monitor (4) mit einkanaligen Stimuli angesteuert wird und mit dem Lichtmesssensor (10) die zugehörigen Sensor-Signale ermittelt werden, dass die mit dem Lichtmesssensor (10) gemessenen Sensor-Signale $S_r$

   a) für mit dem Stimulus r angesteuerte Monitor-Darstellungen in die Formeln

$$X = S_r * C_{rx} \quad Y = S_r * C_{ry} \quad Z = S_r * C_{rz} \quad \text{bzw. die Sensor-Signale } S_g$$

   b) für mit dem Stimulus g angesteuerte Monitor-Darstellungen in die Formeln

$$X = S_g * C_{gx} \quad Y = S_g * C_{gy} \quad Z = S_g * C_{gz} \quad \text{bzw. die Sensor-Signale } S_b$$

   c) für mit dem Stimulus b angesteuerte Monitor-Darstellungen in die Formeln

$$X = S_b * C_{bx} \quad Y = S_b * C_{by} \quad Z = S_b * C_{bz}$$

   eingesetzt werden, worin $S_r$, $S_g$ und $S_b$ die für die Stimuli je eines Kanals r bzw. g bzw. b am Monitor gemessenen linearisierten Sensor-Signale, X,Y,Z die zu den betreffenden Stimuli gehörenden Farbwerte und $C_{rx}$ .... $C_{bz}$ neun Kalibrierungskoeffizienten sind, dass das Gleichungssystem nach den Kalibrierungskoeffizienten $C_{rx}$ .... $C_{bz}$ aufgelöst wird und dass die neun Kalibrierungskoeffizienten $C_{rx}$ .... $C_{bz}$ nicht-flüchtig, vorzugsweise im Lichtmesssensor (10) selbst gespeichert werden.

5. Verfahren nach einem der vorangehenden Ansprüche, **dadurch gekennzeichnet, dass** für die Charakterisierung bzw. Profilierung des Monitors (4) ein externes Farbmessgerät (30) eingesetzt wird.

6. Verfahren nach einem der vorangehenden Ansprüche, **dadurch gekennzeichnet, dass** bei der Charakterisierung bzw. Profilierung des Monitors (4) mindestens eine der Grössen Dunkelpunkt, Weisspunkt, Farbtemperatur, Gamma durch entsprechende Anpassung der Lookup-Tabellen der Grafikkarte eingestellt wird und dass ein oder mehrere ICC Profile für einen Zielfarbraum bzw. mehrere Zielfarbräume bestimmt werden und die entsprechenden Daten inklusive Lookup-Tabellen im Notebook Rechner und nicht-flüchtig vorzugsweise in einem Speicher (13b) des Lichtmesssensors (10) selbst gespeichert werden.

7. Verfahren nach einem der vorangehenden Ansprüche, **dadurch gekennzeichnet, dass** der ein- oder mehrkanalige Lichtmesssensor (10) vorzugsweise herstellerseitig linearisiert wird, indem für einen bzw. mehrere Farbkanäle je eine Lookup-Tabelle (LUT) erzeugt wird, welche einen proportionalen Zusammenhang zwischen der vom Sensor gemessenen Beleuchtungsstärke und dem von ihm erzeugten Sensor-Signal herstellt, und dass diese Lookup-Tabelle(n) nicht flüchtig, vorzugsweise in einem Speicher (13b) des Lichtmesssensors (10) selbst gespeichert werden.

8. Verfahren zur Bestimmung von X,Y,Z-Farbwerten an einem Monitor (4) eines Notebook Rechners mittels eines in den Notebook Rechner integrierten ein- oder mehrkanaligen Lichtmesssensors (10), der zur ihn beaufschlagenden Beleuchtungsstärke proportionale Sensor-Signale erzeugt, **dadurch gekennzeichnet, dass** der Sensor (10) auf den Monitor des Notebook Rechners kalibriert wird und dass die Sensor-signale durch Anwendung einer bei der Kalibrierung des Sensors bestimmten parametrisierten Kalibrierungsfunktion in X,Y,Z-Farbwerte umgerechnet werden.

**9.** Verfahren nach Anspruch 8, **dadurch gekennzeichnet, dass** ein ein- oder mehrkanaliger Lichtmesssensor (10) verwendet wird, der jeweils ein oder mehrere zur ihn beaufschlagenden Beleuchtungsstärke proportionale Sensor-Signale $S_1...S_N$ erzeugt, dass die Kalibrierungsfunktion die Form

$$\begin{matrix} X \\ Y \\ Z \end{matrix} \; = \; f(S_1...S_N, C_1...C_M)$$

aufweist, worin f die parametrisierte Sensorkalibrierungsfunktion ist und $C_1...C_M$ Kalibrierungskoeffizienten bildende Parameter der Sensorkalibrierungsfunktion sind.

**10.** Verfahren nach Anspruch 8, **dadurch gekennzeichnet, dass** ein dreikanaliger Lichtmesssensor (10) verwendet wird, der jeweils drei zur ihn beaufschlagenden Beleuchtungsstärke proportionale Sensor-Signale $S_r$, $S_g$, $S_b$ erzeugt, und dass die Sensor-Signale durch eine Matrix-Multiplikation der Form

$$\begin{matrix} X \\ Y \\ Z \end{matrix} \; = \; [C3*3] * \begin{matrix} S_R \\ S_G \\ S_B \end{matrix}$$

in X,Y,Z-Werte umgerechnet werden, worin [C3*3] eine aus 3*3 KalibrierungsKoeffizienten bestehende Sensor-Kalibrierungsmatrix ist.

**11.** Verfahren nach Anspruch 8, **dadurch gekennzeichnet, dass** ein einkanaliger Lichtmesssensor (10) verwendet wird, der nur ein zur ihn beaufschlagenden Beleuchtungsstärke proportionales Sensor-Signal erzeugt, und dass die mit dem Lichtmesssensor (10) gemessenen Sensor-Signale $S_r$

a) für mit dem Stimulus r angesteuerte Monitor-Darstellungen nach den Formeln

$$X = S_r * C_{rx} \quad Y = S_r * C_{ry} \quad Z = S_r * C_{rz} \quad \text{bzw. die Sensor-Signale } S_g$$

b) für mit dem Stimulus g angesteuerte Monitor-Darstellungen nach den Formeln

$$X = S_g * C_{gx} \quad Y = S_g * C_{gy} \quad Z = S_g * C_{gz} \quad \text{bzw. die Sensor-Signale } S_b$$

c) für mit dem Stimulus b angesteuerte Monitor-Darstellungen nach den Formeln

$$X = S_b * C_{bx} \quad Y = S_b * C_{by} \quad Z = S_b * C_{bz}$$

in X,Y,Z-Farbwerte umgerechnet werden, worin $S_r$, $S_g$ und $S_b$ die für die Stimuli je eines Kanals r bzw. g bzw. b am Monitor gemessenen Sensor-Signale und $C_{rx} .... C_{bz}$ neun Kalibrierungskoeffizienten einer Sensor-Kalibrierungsmatrix sind.

EP 2 213 993 A1

12. Verfahren nach einem der Ansprüche 8-11, **dadurch gekennzeichnet, dass** für die Bestimmung der Kalibrierungskoeffizienten der Sensor-Kalibrierungsmatrix Messungen am mit verschiedenen Stimuli angesteuerten Monitor (4) des Notebook Rechners mittels des Lichtmesssensors (10) durchgeführt werden, wobei der Monitor vorgängig vollständig charakterisiert (profiliert) wurde, so dass zu jedem Stimulus die zugehörigen X,Y,Z-Farbwerte bekannt oder durch Intra- oder Extrapolation berechenbar sind, wobei die mit dem Lichtmesssensor (10) gemessenen Sensor-Signale sowie die zu den Stimuli gehörenden X,Y,Z-Farbwerte in ein Gleichungssystem eingespeist werden, welches die Sensor-Signale über eine Anzahl von Kalibrierungskoeffizienten mit den X,Y,Z-Farbwerten verknüpft, dass das Gleichungssystem nach den Kalibrierungskoeffizienten aufgelöst wird und dass die so berechneten Kalibrierungskoeffizienten nicht-flüchtig, vorzugsweise im Lichtmesssensor (10) selbst abgespeichert werden.

13. Anwendung des Verfahrens nach einem der Ansprüche 8-12 für die Charakterisierung des Monitors eines Notebook Rechners, **dadurch gekennzeichnet, dass** der Monitor (4) mit einem Set von verschiedenen Stimuli angesteuert wird und mit dem integrierten Lichtmesssensor (10) die zugehörigen X,Y,Z-Farbwerte ermittelt werden, dass aus den Stimuli und den daraus resultierenden ermittelten X,Y,Z-Farbwerten ein TCC-Prof für den Monitor (4) berechnet wird, und dass das ICC Profil im Notebook Rechner als Datei abgespeichert wird.

14. Anwendung nach Anspruch 13, **dadurch gekennzeichnet, dass** bei der Charakterisierung bzw. Profilierung des Monitors (4) mindestens eine der Grössen Dunkelpunkt, Weisspunkt, Farbtemperatur, Gamma durch entsprechende Anpassung der Lookup-Tabellen der Grafikkarte eingestellt wird.

**Fig. 1**

**Fig. 2**

Fig. 3

Fig. 4

30

4

31

**Fig. 5**

1

10

3

2

1

10

**Fig. 6**

Europäisches
Patentamt
European
Patent Office
Office européen
des brevets

**EUROPÄISCHER RECHERCHENBERICHT**

**Nummer der Anmeldung**

EP 09 15 1729

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2007/242064 A1 (KUO CHIH-CHIA [TW]) 18. Oktober 2007 (2007-10-18)<br><br>* Absatz [0028] *<br>* Absatz [0037] *<br>* Absatz [0043] - Absatz [0051] *<br>* Absatz [0054]; Abbildungen 1,5,6 *<br>----- | 1-3, 5-10, 12-14 | INV.<br>G01J3/46<br>H04N1/60<br>G01J1/08 |
| Y | EP 0 562 971 A (EASTMAN KODAK CO [US]) 29. September 1993 (1993-09-29)<br>* Seite 8, Zeile 22 - Seite 10, Zeile 14; Abbildungen 11,15 *<br>----- | 1,2,4-9, 11-14 | |
| Y | US 2006/181552 A1 (HOPPLE JERRY D [US]) 17. August 2006 (2006-08-17)<br>* Absatz [0016] - Absatz [0031]; Abbildungen 1,2 *<br>----- | 1,2,4-9, 11-14 | |
| A | US 6 611 249 B1 (EVANICKY DANIEL E [US] ET AL) 26. August 2003 (2003-08-26)<br>* Spalte 12, Zeile 56 - Spalte 13, Zeile 44 *<br>* Spalte 17, Zeile 1 - Spalte 19, Zeile 57 *<br>----- | 1-14 | RECHERCHIERTE SACHGEBIETE (IPC)<br><br>G01J<br>H04N |
| A | US 6 559 826 B1 (MENDELSON JONATHAN [US] ET AL) 6. Mai 2003 (2003-05-06)<br>* Spalte 13, Zeile 54 - Spalte 16, Zeile 20; Abbildungen 10A,11 *<br>----- | 1-14 | |

Der vorliegende Recherchenbericht wurde für alle Patentansprüche erstellt

| Recherchenort | Abschlußdatum der Recherche | Prüfer |
|---|---|---|
| München | 2. Juli 2009 | Besser, Veronika |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 09 15 1729

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-07-2009

| Im Recherchenbericht angeführtes Patentdokument | | Datum der Veröffentlichung | Mitglied(er) der Patentfamilie | | Datum der Veröffentlichung |
|---|---|---|---|---|---|
| US 2007242064 | A1 | 18-10-2007 | TW | 280409 B | 01-05-2007 |
| EP 0562971 | A | 29-09-1993 | JP | 7288698 A | 31-10-1995 |
| | | | US | 5363318 A | 08-11-1994 |
| US 2006181552 | A1 | 17-08-2006 | KEINE | | |
| US 6611249 | B1 | 26-08-2003 | WO | 0005706 A2 | 03-02-2000 |
| US 6559826 | B1 | 06-05-2003 | KEINE | | |

EPO FORM P0461

Für nähere Einzelheiten zu diesem Anhang : siehe Amtsblatt des Europäischen Patentamts, Nr.12/82